# EUROPEAN PATENT APPLICATION

(11) **EP 4 541 523 A1**
(43) Date of publication of application: **23.04.2025**
(21) Application number: 24188756.1
(22) Date of filing: 16.07.2024
(51) Int. Cl.: B25J 13/08, B25J 15/04, B25J 15/10

(54) **ROBOT AND ROBOTIC SYSTEM FOR REPLACING FINGERTIP**

(30) Priority: 19.10.2023 KR 20230140572
(71) Applicant: LG Electronics Inc., Yeongdeungpo-gu Seoul 07336 (KR)
(72) Inventor: LEE, Jeongsoo, 06772 Seoul (KR); SONG, Joonkeol, 06772 Seoul (KR)
(74) Representative: Vossius & Partner Patentanwälte Rechtsanwälte mbB

(57) **Abstract**

A robot includes a robot arm (160) including a plurality of joints bent in various directions, a plurality of fingers (151) coupled to one end of the robot arm (160), and a fingertip (140) coupled to a distal end of each of the fingers (151). The distal end of the finger (151) includes a first magnet (155) and coupling protrusions (153) located around the first magnet (155). The fingertip (140) includes a tip head (141) contacting an object to be gripped, a second magnet (145) located on the tip head (141) and coupled to the first magnet (155), and a coupling groove (143) into which the coupling protrusions (153) are inserted, on one side of the tip head (141). The robot may grip various types of objects by enabling replacement with a fingertip (140) suitable for a situation.

## Description

### BACKGROUND

### 1. Field

The disclosure is intended to provide a robot and robotic system capable of replacing a fingertip of a gripper that grips an object.

### 2. Description of Related Art

In the past, robots were mainly used for repetitive tasks in which only specified operations are performed, whereas robots combined with artificial intelligence (AI) to operate by making their own judgments have recently emerged.

AI robots capable of recognizing their surroundings using various sensors, such as a vision sensor, a proximity sensor, and a lidar, and calculating and performing appropriate operations find their applications in various fields.

Particularly, a robot capable of picking up and carrying an object like a human arm includes an arm bent or unfolded at various angles, and a gripper for gripping an object may be located at a distal end of the arm. The gripper includes two or more fingers, and three or more fingers to stably carry a gripped object.

The fingers may grip an object by spreading, placing the object between them, and then closing them. A force with which the fingers grip an object is important for gripping and carrying it, but the shapes of the fingertips are also important for gripping objects of different shapes.

A variety of objects may be gripped, such as thin, flat, or slim objects, and the shapes of the fingertips should be suitable for the type of an object to be gripped to facilitate the gripping of the object.

In a conventional robot, however, a gripper has fixed fingertips in a single shape, which limits objects available for gripping, and to replace the fingertips, fingertip removal through unscrewing and then fingertip reattachment are required, thereby making it difficult to flexibly respond to various situations.

### SUMMARY

An aspect of the disclosure is to address at least the above-mentioned problems and/or disadvantages and to provide at least the advantages described below. Accordingly, an aspect of the disclosure is to provide a robot capable of replacing a fingertip on its own without requiring additional manual work, and a fingertip replacement method therefor.

The problems to be solved by the disclosure are not limited to the technical problems mentioned above, and other technical problems not mentioned will be understood by those skilled in the art from the following description.

According to an aspect of the disclosure, a robot is provided, including a robot arm including a plurality of joints bent in various directions, a plurality of fingers coupled to one end of the robot arm, and a fingertip coupled to a distal end of each of the fingers. The distal end of the finger includes a first magnet and a coupling protrusion located around the first magnet. The fingertip includes a tip head contacting an object to be gripped, a second magnet located on the tip head and coupled to the first magnet, and a coupling groove into which the coupling protrusion is inserted, on one side of the tip head.

The coupling protrusion may include a metallic material, and the second magnet may be larger than the first magnet and disposed to overlap at least a portion of the coupling groove.

The first magnet may be disposed with an S pole and an N pole adjacent to each other in a first direction, and the second magnet may be disposed with an N pole and an S pole adjacent to each other in the first direction, facing opposite poles of the first magnet.

The robot may further include a third magnet located inside the coupling groove.

The first magnet may protrude further than the coupling protrusion, and when the fingertip is coupled to the distal end of the finger, the third magnet may be disposed adjacent to the first magnet.

A pair of coupling grooves may be disposed in the first direction, and a pole of the third magnet may face an opposite pole of the first magnet.

The fingertip may include a coupling ring surrounding outer perimeters of the first magnet and the coupling protrusion on one side thereof.

The coupling ring may include a mounting groove recessed inward on an outer circumference thereof.

The tip head may include at least one of a hemisphere type including a protruding curved surface, a groove type including an inward recess, or a long extended pin type.

The robot may include an identification mark located on one side of the fingertip and including information about a shape of the tip head, a tip sensor located at the distal end of the finger and detecting the identification mark, and a controller driving the finger according to the shape of the tip head detected by the tip sensor.

The robot may include a finger electrode formed on the coupling protrusion and connected to a controller, a tip electrode formed in the coupling groove and connected to the finger electrode, and a tactile sensor located on the fingertip, connected to the tip electrode, and disposed on the tip head.

According to another aspect of the disclosure, a robotic system is provided, including a robot including a plurality of fingers coupled to one end of a robot arm including a plurality of joints, a fingertip coupled to a distal end of each of the fingers, and a tip holder on which the fingertip is mounted. The fingertip includes a tip head contacting an object to be gripped, a coupling ring surrounding the distal end of the finger on one side of the tip head, and a mounting groove recessed inward around an outer circumference of the coupling ring. The tip holder includes a U-shaped seating portion inserted into the mounting groove of the fingertip and having one side open.

The robot may descend the finger in a vertical direction from above the seating portion toward one side of the fingertip, and when the distal end of the finger is coupled to the fingertip, move the finger in a direction of the one open side of the seating portion.

The distal end of the finger may include a first magnet disposed with an S pole and an N pole adjacent to each other in a first direction, the fingertip may include a second magnet located on the tip head and coupled to the first magnet, and the second magnet may be disposed with an N pole and an S pole adjacent to each other in the first direction.

The coupling ring may be circular with a predetermined curvature to allow the fingertip to rotate on the seating portion.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating a robotic system according to an embodiment of the disclosure;
FIG. 2 is a perspective view illustrating a robot according to an embodiment of the disclosure;
FIG. 3 is a diagram illustrating a gripper of a robot according to an embodiment of the disclosure;
FIG. 4 is a diagram illustrating various embodiments of a fingertip of a robot according to an embodiment of the disclosure;
FIG. 5 is an exploded view illustrating a distal end of a finger and a fingertip in a robot according to an embodiment of the disclosure;
FIG. 6 is a cross-sectional view illustrating a method of coupling a fingertip to a distal end of a finger in a robot according to an embodiment of the disclosure;
FIG. 7 is a plan projection view illustrating a method of coupling a fingertip to a distal end of a finger in a robot according to an embodiment of the disclosure;
FIG. 8 is a diagram illustrating a tip holder in a robotic system according to an embodiment of the disclosure; and
FIG. 9 is a diagram illustrating a method of fastening with a fingertip accommodated in a tip holder in a robotic system according to an embodiment of the disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

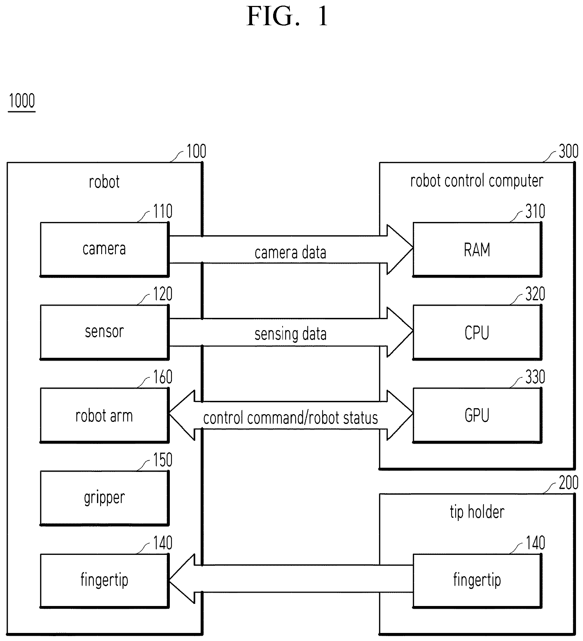

FIG. 1 is a block diagram illustrating a robotic system 1000 according to an embodiment of the disclosure.

A robot 100, which is a mechanical device that may automatically perform a task or an operation, may be controlled by an external control device or have a built-in control device. The robot 100 may perform a task which is difficult for a human to perform, such as lifting a heavy item, performing a precise task, and working in an extreme environment.

The robot 100 may be provided with a driving unit including an actuator or motor to perform a task, provide power, and may make various physical motions such as moving joints. Due to their high manufacturing costs and problems such as expertise in operation, industrial robots or medical robots with appearances specialized for specific tasks were developed first. The industrial robots and the medical robots repeatedly made the same operations in specified locations. AI-based robots have been emerging, which are equipped with cameras and various sensors 120 and make decisions based on information recognized by the cameras and the sensors 120 to recognize minute differences and reflect them to perform optimized work in the case of precision work, even when the same task is performed.

The robot 100 may be implemented with AI technology, as a guide robot, a transportation robot, a cleaning robot, a wearable robot, an entertainment robot, a pet robot, an unmanned flying robot, or the like. The robot may include a robot control module for controlling an operation, and the robot control module may refer to a software module or a chip that implements the software module in hardware.

The robot 100 may perform the above operations using a learning model composed of at least one artificial neural network. For example, the robot may recognize a surrounding environment and an object using the learning model, and determine an operation using information about the recognized surrounding environment or object. The learning model may be trained directly in the robot or an external device such as an AI server.

Although the robot 100 may perform an operation by generating results directly using the learning model, it may also transmit information from the sensors 120 to an external device such as an AI server, receive results generated accordingly, and perform the operation.

The robot 100 may obtain robot status information, detect (recognize) a surrounding environment and an object, or determine a response to a user interaction or determine an operation, by using sensor information obtained from various types of sensors 120. The sensors 120 may include a proximity sensor, an illumination sensor, an acceleration sensor, a magnetic sensor, a gyro sensor, an inertial sensor, a red, green, and blue (RGB) sensor, an infrared (IR) sensor, a fingerprint recognition sensor, an ultrasonic sensor, an optical sensor, a microphone, a lidar, a radar, and so on.

The robot may be essentially provided with various input units and a wireless communication unit to collect data for AI training, and perform an optimal operation by synthesizing various pieces of information. A learning processor that implements AI may be mounted on a controller of the robot to perform training, or to transmit collected information to a server, be trained through the server, transmit training results to the robot, and perform a task based on the training results.

The robot may be provided with a touch screen or buttons to receive a user input, and may also receive a command by recognizing a user's voice. A processor may obtain intent information corresponding to a user input by using at least one of a speech to text (STT) engine for converting a voice input into a text string or a natural language processing (NLP) engine for obtaining intent information of a natural language.

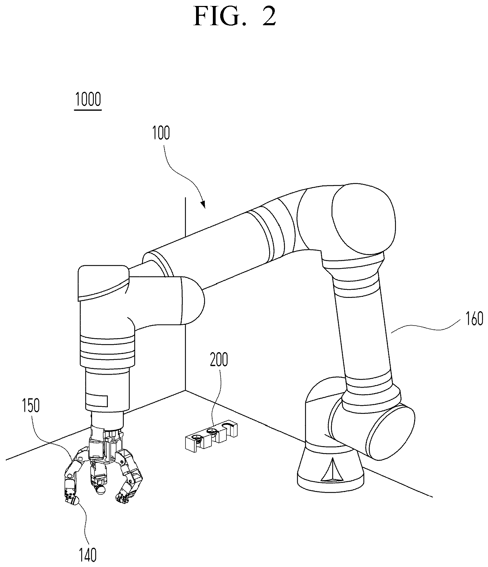

FIG. 2 is a perspective view illustrating the robotic system 1000 according to an embodiment of the disclosure. The robotic system 1000 of the disclosure includes the robot 100 including a robot arm 160 bent in various directions, a robot control computer 300 that controls the robot 100, and a tip holder 200 that holds a fingertip 140.

As illustrated in FIG. 2, the robot 100 may change the position and angle of the robot arm 160 to a desired position by controlling a plurality of joints. A gripper 150 located at an end of the robot arm 160 may include a plurality of fingers 151 to grip an object.

The gripper 150 may include two or more fingers 151, preferably three or more fingers 151 to maintain balance of force, when holding an object. The fingers 151 may include joints bent in an inward direction, and may grasp an object by bringing distal ends 152 of the fingers 151 close together and release the object by spreading the distal ends 152 of the fingers 151 apart.

The robot 100 may include fingertips 140 coupled to the distal ends 152 of the fingers to stably grip an object. The fingertips 140 may be optimized in shape and replaced depending on the types of objects to be gripped.

The robot 100 may include a camera 110 and a sensor 120 to detect an object to be gripped and its surroundings. For the camera 110, an external camera may be further used as an auxiliary camera in addition to a camera located within the robot 100. The sensor 120 may include a proximity sensor, perform detection to ensure that a person or an object does not collide with the robot arm 160, and allow the robot arm 160 to move, while avoiding surrounding objects. The sensor 120 may include a 6-axis force/torque sensor that detects movement of the robot arm 160.

The robot control computer 300 that controls the robot 100 may be located outside the robot arm 160 and transmit and receive signals through wireless communication or wired communication. The robot control computer 300 may collect information obtained by the camera 110 and the sensor 120 of the robot 100, and transmit a control command to control the robot arm 160 and gripper 150 of the robot 100 based on the collected information.

The robot control computer 300 may include a random access memory (RAM) 310, a central processing unit (CPU) 320, and a graphic process unit (GPU) 330 to process image information from the camera 110.

The fingertips 140 coupled to the distal ends 152 of the fingers of the disclosure are replaceable, and the tip holder 200 may be included to keep and accommodate fingertips 140. The tip holder 200 may include a seating portion 210 on which a plurality of fingertips 140 may be seated.

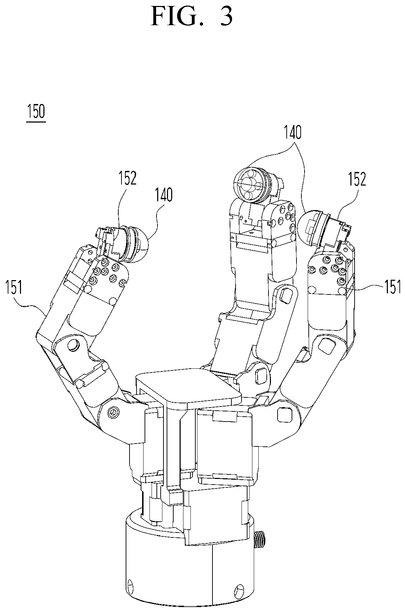

FIG. 3 is a diagram illustrating the gripper 150 of the robot 100 according to an embodiment of the disclosure. The robot 100 of the disclosure may include three fingers 151 and change distances among the distal ends 152 of the fingers by a plurality of joints.

Hemispherical fingertips 140 may be coupled to the distal ends 152 of the fingers illustrated in FIG. 3 and have shapes corresponding to the digits of human fingers, such that they may touch an object in any direction and thus grip objects of various shapes.

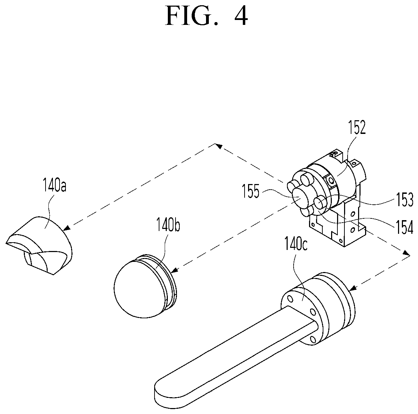

FIG. 4 is a diagram illustrating various embodiments of the fingertips 140 of the robot 100 according to an embodiment of the disclosure. The fingertips 140 of the disclosure are replaceable and may be replaced with fingertips of other shapes depending on objects to be gripped, in addition to the hemispherical shape illustrated in FIG. 3.

For example, the fingertips 140 may include a groove-type fingertip 140a that protrudes in upper and lower directions and is recessed at the center thereof to grip a thin and long object, and a pin-type fingertip 140c which is flat and extended, like a knife, to support the bottom surface of a thin and flat object such as a plate or a book. The fingertip 140 may include an identification mark containing information about the shape of the fingertip 140. The finger 151 may include a tip sensor that recognizes an identification mark. The identification mark may be an image such as a QR code or barcode, or at magnets. The tip sensor may be either an image sensor that identifies image type identification mark or a Hall sensor that detects changes in magnetic force of the magnet type identification mark.

The robot 100 of the disclosure should not only repeatedly perform a specified operation but also perform various operations according to situations. The robot control computer 300 may identify the shape of an object recognized by the camera 110 and replace an existing fingertip 140 with an appropriate fingertip 140 according to the shape. The robot 100 may select one of the fingertips 140 based on the information of the shape of the fingertip 140.

In a robot 100 equipped with a conventional robot arm 160 capable of gripping an object, a fingertip 140 may not be replaced, or even if it is replaceable, there is the inconvenience of manual unscrewing and assembly.

The robot 100 of the disclosure may attach and detach the fingertips 140 using a magnet. The robot 100 may replace the fingertips 140 on its own within a short period of time, which allows the robot 100 to grip various types of objects.

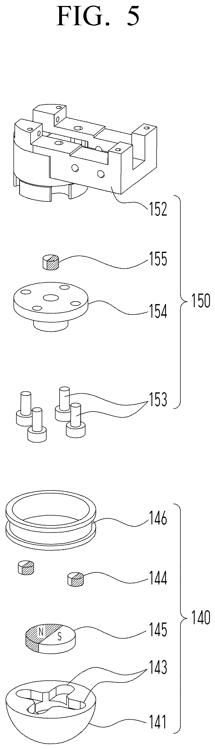

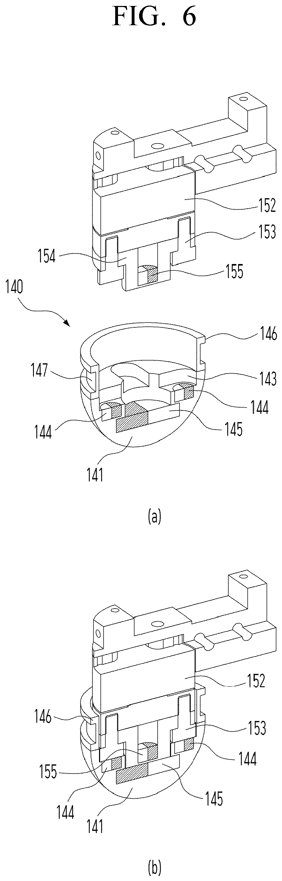

FIG. 5 is an exploded view illustrating the distal end 152 of a finger and a fingertip 140 in the robot 100 according to an embodiment of the disclosure, and FIG. 6 is a cross-sectional view illustrating a method of coupling the distal end 152 of the finger and the fingertip 140 to each other.

Referring to FIG. 5, a first magnet 155 located at the distal end 152 of the finger and a second magnet 145 located at the fingertip 140 may be included. A distal end bracket 154 may be included, which secures the first magnet 155 to the distal end 152 of the finger and contacts a coupling surface of the fingertip 140.

The first magnet 155 may be located at the center of the distal end bracket 154, and the center of the distal end bracket 154 where the first magnet 155 is located may protrude. A plurality of bolts 153 that couple the distal end bracket 154 to the distal end 152 of the finger may protrude from the distal end bracket 154 to form coupling protrusions 153.

As illustrated in FIG. 4, the coupling protrusions 153 may protrude around the first magnet 155, and the fingertip 140 may include coupling grooves 143 corresponding to the coupling protrusions 153.

The coupling grooves 143 and the coupling protrusions 153 may guide the fingertip 140 to be coupled to a correct position, and help the fingertip 140 to be maintained stably fastened to the distal end 152 of the finger without rotating, when gripping an object.

The first magnet 155 and the second magnet 145 to be described later may have a left-right symmetrical structure with N and S poles arranged laterally, and there may be two or four coupling protrusions 153. Because the coupling protrusions 153 are bolts that secure the distal end bracket 154 to the distal end 152 of the finger, preferably four coupling protrusions (bolts) 153 arranged in a cross shape are provided in consideration of a coupling force.

The coupling protrusions 153 and the coupling grooves 143 may serve as electrodes that electrically connect the fingertip 140 and the robot 100 to each other. The fingertip 140 may be equipped with a sensor such as a tactile sensor or a force sensor, for more precise work. To receive information from the sensor of the fingertip 140, the fingertip 140 and the distal end 152 of the finger should be electrically connected to each other.

Information collected by the sensor 120 of the fingertip 140 may be transmitted to a controller (the robot control computer 300) of the robotic system 1000, using the coupling protrusions 153 and the coupling grooves 143, which come into contact when the fingertip 140 is fastened to the distal end 152 of the finger, as electrodes.

The second magnet 145 disposed at a position facing the first magnet 155 located at the distal end 152 of the finger may be located inside a tip head 141 of the fingertip 140. The tip head 141 is a member that directly contacts an object to be gripped, and a hemispherical tip head 141 may be provided in this embodiment.

The second magnet 145 and the coupling grooves 143 may be formed on one side of the tip head 141, for coupling to the distal end 152 of the finger. As illustrated in FIG. 4, the first magnet 155 protrudes, and may protrude further than the coupling protrusions 153. The other side of the tip head 141 may contact an object and have a different shape depending on a usage, as illustrated in FIG. 4.

As illustrated in FIG. 6(a), the other side of the tip head 141 may be recessed to be concave in correspondence with the protruding shape of the first magnet 155, and the second magnet 145 may be located in the concave recessed interior of the other side of the tip head 141.

The N and S poles of the first magnet 155 and the second magnet 145 may be arranged in a direction perpendicular to a coupling direction. In the drawings, hatched portions are the N poles, and unhatched portions are the S poles. As illustrated in FIG. 6(b), the poles of the first magnet 155 and the second magnet 145 may be arranged such that the opposite poles facing each other, and thus when the first magnet 155 and the second magnet 145 are close, a magnetic force of attraction may be generated, thereby coupling the fingertip 140 to the distal end 152 of the finger.

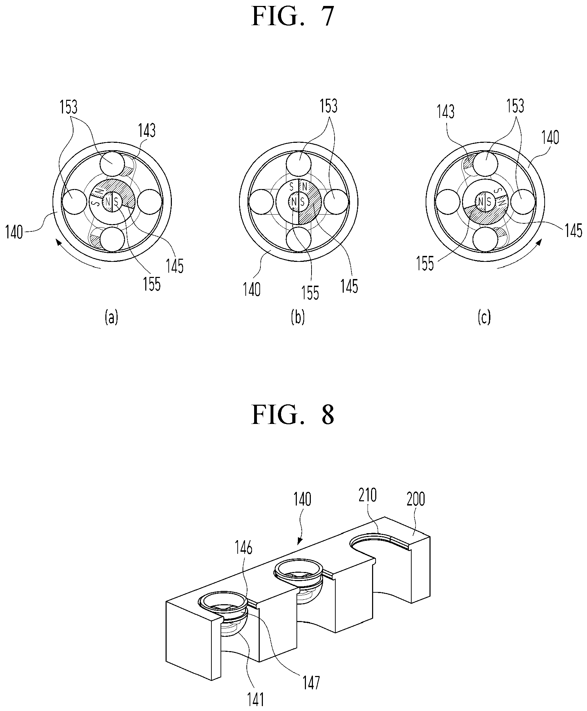

FIG. 7 is a plan projection view illustrating a method of coupling the distal end 152 of a finger and a fingertip 140 to each other in the robot 100 according to an embodiment of the disclosure. Since the N and S poles of the first magnet 155 and the second magnet 145 are arranged in a horizontal direction, when the N pole of the first magnet 155 and the S pole of the second magnet 145 are arranged misaligned, an attractive force may be generated by a magnetic force, and thus the fingertip 140 may rotate so that the N pole of the first magnet 155 and the S pole of the second magnet 145 face each other.

When the poles of the second magnet 145 are arranged obliquely to, not in line with, the direction of arrangement of the poles of the first magnet 155, as illustrated in FIG. 7(a) or FIG. 7(c), the fingertip 140 may rotate such that the pole arrangement of the first magnet 155 is opposite to that of the second magnet 145, as illustrated in FIG. 7(b).

The fingertip 140 may rotate clockwise in the case of FIG. 7(a) and counterclockwise in the case of FIG. 7(c), such that the second magnet 145 with the N pole on the right and the S pole on the left may be coupled to the distal end 152 of the finger.

The distal end 152 of the finger may be provided with a Hall sensor (not shown), and when the coupling protrusions 153 are inserted into the coupling grooves 143, the strength of the second magnet 145 detected by the Hall sensor reaches a maximum, which may be detected as completion of coupling of the fingertip 140.

In order to increase a fastening force between the coupling protrusions 153 and the coupling grooves 143, a third magnet 144 located inside the coupling grooves 143 may be further included. The third magnet 144 provides a force to pull the coupling protrusions 153 including a metallic material. When the first magnet 155 protrudes further than the coupling protrusions 153 and the fingertip 140 is coupled to the distal end 152 of the finger, the first magnet 155 and the third magnet 144 may be arranged side by side in the horizontal direction, as illustrated in FIG. 6(b).

However, when the second magnet 145 is sufficiently large relative to the first magnet 155 and large enough to cover the coupling grooves 143, the second magnet 145 may provide a magnetic force pulling the coupling protrusions 153, which may allow the third magnet 144 to be omitted. Alternatively, when the magnetic force of the second magnet 145 and the first magnet 155 is sufficiently strong, the third magnet 144 may be omitted.

Alternatively, the third magnet 144 may be used as an identification mark. A Hall sensor may be disposed at the distal end 152 of the finger, and depending on the number of third magnets 144, the Hall sensor may detect a different magnetic force change and identify the type of the fingertip 140 coupled to the distal end 152 of the finger based on the detected magnetic force change.

To prevent repulsion between the first magnet 155 and the third magnet 144, a third magnet 144 in a direction in which the N pole of the first magnet 155 is located may be disposed with an S pole directed toward the center, and a third magnet 144 in a direction where the S pole of the first magnet 155 is located may be disposed with an N pole directed toward the center.

Since the magnets guide the coupling direction of the fingertip 140, even when the coupling protrusions 153 are not provided with a component inducing rotation of the fingertip 140, such as an inclined surface, the coupling grooves 143 of the fingertip 140 may be coupled to the coupling protrusions 153 of the distal end 152 at a correct position.

The magnets 145 and 155 may provide a coupling force in the coupling direction, and the coupling protrusions 153 and the coupling grooves 143 may prevent the fingertip 140 from rotating in the finger. In addition, it is possible to prevent the fingertip 140 from being separated from the distal end 152 of the finger due to a force applied in the horizontal direction. However, the coupling protrusions 153 and the coupling grooves 143 are small in thickness in consideration of the size of the tip head 141, and thus their resistance to a horizontal force is not large.

Therefore, to compensate for this, a coupling ring 146 may be included on the coupling surface of the tip head 141, surrounding the distal end 152 of the finger. The coupling ring 146 is a position coupled to the distal end 152 of the finger and also to the seating portion 210 of the tip holder 200, which will be described later. The coupling ring 146 may include a mounting groove 147 recessed along the circumference thereof, for coupling to the seating portion 210.

FIG. 8 is a diagram illustrating the tip holder 200 in the robotic system 1000 according to an embodiment of the disclosure. The tip holder 200 may include the seating portion 210 into which the coupling ring 146 of the fingertip 140 is inserted, at a position spaced a predetermined distance from the floor. The seating portion 210 may have a U-shape with one side open and an inner curvature corresponding to the curvature of the fingertip 140.

The tip holder 200 may have a predetermined height to prevent the other side of the tip head 141 of the fingertip 140 from touching the floor, and the seating portion 210 may be located at the top of the tip holder 200. The tip holder 200 may include a plurality of seating portions 210 to hold a plurality of fingertips 140. Since the robot 100 of the disclosure includes three fingers, the tip holder 200 may also have three seating portions 210. The seating portion 210 may protrude from a top end of the tip holder 200 to a thickness corresponding to the mounting groove 147 formed on the coupling ring 146.

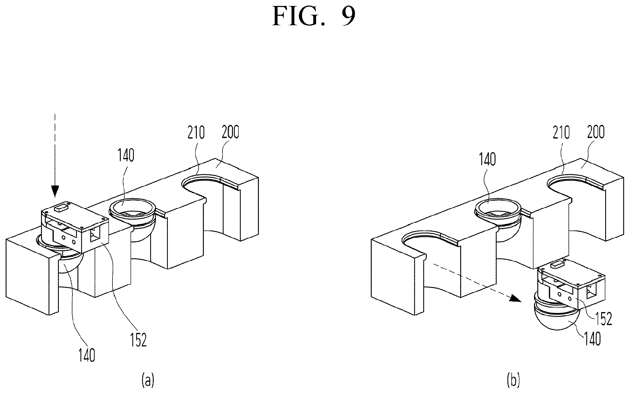

FIG. 9 is a diagram illustrating a method of fastening with a fingertip 140 accommodated in the tip holder 200 of the robotic system 1000 according to an embodiment of the disclosure. The seating portion 210 of the tip holder 200 may be coupled to the mounting groove 147 of the coupling ring 146 to limit movement of the fingertip 140 in the vertical direction.

Instead, the seating portion 210 has a U-shape with one side open, and thus the fingertip 140 may be mounted and removed in an open direction. As illustrated in FIG. 9(a), the distal end 152 of the finger of the robot 100 descends downward from the vertical direction of the fingertip 140 mounted on the seating portion 210 of the tip holder 200. The fingertip 140 may be fastened to the distal end 152 of the finger by a magnetic force of the first magnet 155 of the distal end 152 and the second magnet 145 of the fingertip 140 in the finger.

As described before with reference to FIG. 7, even if the direction of the second magnet 145 of the fingertip 140 does not match the first magnet 155, the second magnet 145 may rotate to correspond to the arrangement of the first magnet 155, while being mounted on the seating portion 210.

When the second magnet 145 is coupled to the first magnet 155 and the coupling protrusions 153 are inserted into the coupling grooves 143, the robot 100 may remove the fingertip 140 from the seating portion 210 by horizontally moving the fingertip 140 in the direction in which the seating portion 210 is opened, using the distal end 152 of the finger, as illustrated in FIG. 9(b).

As described above, as the robot 100 of the disclosure enables replacement with a fingertip 140 that suits a situation, it may grip various types of objects.

Further, the robot 100 of the disclosure may quickly replace a fingertip 140 without a separate assembly process, thereby minimizing a delay in performing work.

Further, the robot 100 of the disclosure has the advantage of automatically replacing the fingertip 140, obviating the need for manual work.

Further, the tip holder 200 of the robot 100 of the disclosure may be minimized in volume due to its simple structure.

The above detailed description should not be construed as being limitative in all terms, but should be considered as being illustrative. The scope of the disclosure should be determined by reasonable analysis of the accompanying claims, and all changes in the equivalent range of the disclosure are included in the scope of the disclosure.

## Claims

1. A robot comprising:
a robot arm (160) including a plurality of joints at which the robot arm (160) is bendable in various directions;
a plurality of fingers (151) coupled to one end of the robot arm (160); and
a fingertip (140) coupled to a distal end of a finger of the plurality of fingers (151),
wherein the distal end of the finger (151) includes:
a first magnet (155); and
a coupling protrusion (153) located around the first magnet (155),
wherein the fingertip (140) includes:
a tip head (141) configured to contact an object to be gripped; and
a second magnet (145) located on the tip head (141) and coupled to the first magnet (155), and
wherein one side of the tip head (141) has a coupling groove (143) into which the coupling protrusion (153) is inserted.

2. The robot of claim 1, wherein the coupling protrusion (153) includes a metallic material, and
wherein the second magnet (145) is larger than the first magnet (155) and disposed to overlap at least a portion of the coupling groove (143).

3. The robot of claim 1 or claim 2, wherein the first magnet (155) is disposed with an S pole and an N pole adjacent to each other along a first direction, and
wherein the second magnet (145) is disposed with an N pole and an S pole adjacent to each other along the first direction, such that the N pole and the S pole of the second magnet (145) face the S pole and the N pole of the first magnet (155), respectively.

4. The robot of claim 3, further comprising a third magnet (144) located inside the coupling groove (143).

5. The robot of claim 4, wherein the first magnet (155) protrudes further than the coupling protrusion (153), and
wherein the third magnet (144) is disposed adjacent to the first magnet (155) based on the fingertip (140) being coupled to the distal end of the finger (151).

6. The robot of claim 5, wherein a pair of coupling grooves (143) are disposed along the first direction, and
wherein the first magnet (155) and the third magnet (144) are arranged such that the S pole and the N pole of the first magnet (155) faces a N pole and an S pole of the third magnet (144).

7. The robot of one of claims 1 to 8, wherein the fingertip (140) further includes a coupling ring (146) surrounding outer perimeters of the first magnet (155) and the coupling protrusion (153) on one side thereof.

8. The robot of claim 7, wherein the coupling ring (146) has a mounting groove (147) recessed inward on an outer circumference thereof.

9. The robotic system of claim 14, wherein the coupling ring (146) is circular with a predetermined curvature to allow the fingertip (140) to rotate on the seating portion.

10. The robot of one of claims 1 to 8, wherein a shape of the tip head (141) is at least one of a hemisphere type including a protruding curved surface, a groove type including an inward recess, or a long extended pin type.

11. The robot of claim 10, further comprising:
an identification mark located on one side of the fingertip (140) and including information about the shape of the tip head (141);
a tip sensor located at the distal end of the finger and configured to detect the identification mark; and
a controller (300) configured to drive the finger according to the information about the shape of the tip head (141) included in the identification mark detected by the tip sensor.

12. The robot of claims 1 to 11, further comprising:
a finger electrode on the coupling protrusion (153) and connected to a controller;
a tip electrode in the coupling groove and connected to the finger electrode; and
a tactile sensor located on the fingertip (140), connected to the tip electrode, and disposed on the tip head (141).

13. A robotic system comprising:
the robot of one of claims 8 to 12; and
a tip holder (200) on which the fingertip (140) is mounted,
wherein the fingertip (140) includes:
a tip head (141) configured to contact an object to be gripped; and
a coupling ring (146) surrounding the distal end of the finger on one side of the tip head (141),
wherein a mounting groove (147) is recessed inward around an outer circumference of the coupling ring (146), and
wherein the tip holder (200) includes a U-shaped seating portion (210) inserted into the mounting groove (147) of the fingertip (140) and having an open side.

14. The robotic system of claim 13, wherein the robot is configured to lower the finger along a vertical direction from above the seating portion (210) toward one side of the fingertip (140), and to move the finger (151) in towards the open side of the seating portion (210) based on the distal end of the finger being coupled to the fingertip (140).

## Amended claims

### Amended claims in accordance with Rule 137(2) EPC.

1. A robot comprising:
a robot arm (160) including a plurality of joints at which the robot arm (160) is bendable in various directions;
a plurality of fingers (151) coupled to one end of the robot arm (160); and
a fingertip (140) coupled to a distal end of a finger of the plurality of fingers (151),
wherein the distal end of the finger (151) includes:
a first magnet (155); and
coupling protrusions (153) located around the first magnet (155),
wherein the fingertip (140) includes:
a tip head (141) configured to contact an object to be gripped;
a second magnet (145) located on the tip head (141) and coupled to the first magnet (155); and
a coupling ring (146) surrounding outer perimeters of the first magnet (155) and the coupling protrusions (153) on one side thereof, and
wherein one side of the tip head (141) has a coupling groove (143) into which the coupling protrusions (153) is inserted.

2. The robot of claim 1, wherein the coupling protrusions (153) includes a metallic material, and
wherein the second magnet (145) is larger than the first magnet (155) and disposed to overlap at least a portion of the coupling groove (143).

3. The robot of claim 1 or claim 2, wherein the first magnet (155) is disposed with an S pole and an N pole adjacent to each other along a first direction, and
wherein the second magnet (145) is disposed with an N pole and an S pole adjacent to each other along the first direction, such that the N pole and the S pole of the second magnet (145) face the S pole and the N pole of the first magnet (155), respectively.

4. The robot of claim 3, further comprising a third magnet (144) located inside the coupling groove (143).

5. The robot of claim 4, wherein the first magnet (155) protrudes further than the coupling protrusions (153), and
wherein the third magnet (144) is disposed adjacent to the first magnet (155) based on the fingertip (140) being coupled to the distal end of the finger (151).

6. The robot of claim 5, wherein a pair of coupling grooves (143) are disposed along the first direction, and
wherein the first magnet (155) and the third magnet (144) are arranged such that the S pole and the N pole of the first magnet (155) faces a N pole and an S pole of the third magnet (144).

7. The robot of claim 1, wherein the coupling ring (146) has a mounting groove (147) recessed inward on an outer circumference thereof.

8. The robot of one of claims 1 to 7, wherein a shape of the tip head (141) is at least one of a hemisphere type including a protruding curved surface, a groove type including an inward recess, or a long extended pin type.

9. The robot of claim 8, further comprising:
an identification mark located on one side of the fingertip (140) and including information about the shape of the tip head (141);
a tip sensor located at the distal end of the finger and configured to detect the identification mark; and
a controller (300) configured to drive the finger according to the information about the shape of the tip head (141) included in the identification mark detected by the tip sensor.

10. The robot of claims 1 to 9, further comprising:
a finger electrode on the coupling protrusions (153) and connected to a controller;
a tip electrode in the coupling groove and connected to the finger electrode; and
a tactile sensor located on the fingertip (140), connected to the tip electrode, and disposed on the tip head (141).

11. A robotic system comprising:
the robot of one of claims 1 to 10; and
a tip holder (200) on which the fingertip (140) is mounted,
wherein the fingertip (140) includes:
a tip head (141) configured to contact an object to be gripped; and
a coupling ring (146) surrounding the distal end of the finger on one side of the tip head (141),
wherein a mounting groove (147) is recessed inward around an outer circumference of the coupling ring (146), and
wherein the tip holder (200) includes a U-shaped seating portion (210) inserted into the mounting groove (147) of the fingertip (140) and having an open side.

12. The robotic system of claim 11, wherein the robot is configured to lower the finger along a vertical direction from above the seating portion (210) toward one side of the fingertip (140), and to move the finger (151) in towards the open side of the seating portion (210) based on the distal end of the finger being coupled to the fingertip (140).

13. The robotic system of claim 11 wherein the coupling ring (146) is circular with a predetermined curvature to allow the fingertip (140) to rotate on the seating portion.
